# FASCICULE DE BREVET EUROPEEN

(11) **EP 0 931 120 B1**
(45) Date de publication et mention de la délivrance du brevet: **25.04.2001**
(21) Numéro de dépôt: 97911396.6
(22) Date de dépôt: 17.11.1997
(51) Int. Cl.: C09K 21/14, C09D 5/18, D06M 17/00

(54) **COMPOSITION IGNIFUGEANTE SANS HALOGENE, FIL IGNIFUGE AVEC CELLE-CI, ET STRUCTURE TEXTILE IGNIFUGE COMPORTANT DE TELS FILS**
HALOGENFREIE FEUERHEMMENDE ZUSAMMENSETZUNG ,HIER MIT BRANDGESCHÜTZTEN DRACHT UND FEUERFESTES TEXTILES FLÄCHENGEBILDE AUS DIESEN DRÄHTEN
FLAME RETARDING COMPOSITION WITHOUT HALOGEN, FLAME RETARDING YARN MADE THEREFROM, AND FLAME RETARDING TEXTILE STRUCTURE CONTAINING SUCH YARN

(30) Priorité: 19.11.1996 FR 9614418
(43) Date de publication de la demande: 28.07.1999
(73) Titulaire: Chavanoz Industrie, 38230 Chavanoz (FR)
(72) Inventeur: BROUTIER, Isabelle, F-38460 Saint Romain de Jalionas (FR); DAMOUR, François-Xavier, F-69005 Lyon (FR)
(74) Mandataire: Guerre, Dominique
(86) Numéro de dépôt international: IB9701443
(87) Numéro de publication internationale: WO9822555

(56) Documents cités:
- US-A- 4 256 786
- US-A- 4 265 963
- US-A- 5 185 103

## Description

La présente invention concerne une composition ignifugeante, comprenant un agent intumescent, destinée à être appliquée sur un substrat, par exemple des fils ou structures textiles, afin de rendre ceux-ci plus résistants au feu. La présente invention sera plus particulièrement décrite par rapport à l'ignifugation de fils et structures textiles, et les exigences d'ininflammabilité de tels fils et structures textiles.

Il est déjà connu, par exemple par le brevet américain US-A-3 934 066, d'appliquer, par exemple par imprégnation, un agent intumescent à un support poreux, et d'incorporer ou appliquer ledit support ignifugé à des substrats combustibles, afin de les rendre ininflammables. L'agent intumescent comprend des composants solubles ou dispersibles dans l'eau, notamment un composé acide fort, thermodégradable, par exemple, l'acide phosphorique, et un composé polyhydrique carboné, par exemple, le pentaérythritol.

Une description assez détaillée du fonctionnement et de la composition de systèmes intumescents est donnée dans l'article du journal français intitulé "Plastiques Modernes, Dossiers Additifs, Août 1994", et l'article paru dans "Flame Retardants '94". Toutefois, et comme souligné dans ce document, l'application réelle de ces agents, par rapport au large choix possible, a été jusqu'à présent très limitée.

De manière générale, de tels agents intumescents sont également connus en association avec des matières plastiques. Le brevet américain US-A-4 256 786, par exemple, décrit une composition ignifugeante pour l'imprégnation d'une mousse à base de matière plastique, ou son association avec une couche textile, notamment une mousse de polyuréthanne avec un tissu en coton. Les compositions sont obtenues en préparant une pâte aqueuse comportant du charbon activé, un polyphosphate d'ammonium, un pentaérythritol et un liant, qui peut être une résine acrylique. De telles résines sont utilisées en partie minoritaire de la composition ignifugeante, d'autres composants étant incorporés (par exemple charbon actif, copolymère estérifié d'anhydride maléique et de styrène, CMC), qui peuvent augmenter l'inflammabilité de la composition ignifugeante. Par ailleurs, les compositions décrites dans ce document ne peuvent pas être utilisées pour ignifuger des produits qui seront exposés aux intempéries, car elles présentent des problèmes de reprise d'humidité.

Par ailleurs, le brevet américain US-A-5 185 103 décrit une composition intumescente, pour ignifuger des câbles électriques, comprenant un polymère organique, du polyphosphate d'ammonium (APP), et un polyol (alkylcarbonate). Le polymère organique est insoluble dans l'eau et généralement thermoplastique, par exemple du polyéthylène, polypropylène, de l'EVA et des polyesteruréthannes. La composition est obtenue par simple mélange des différents composants à une température suffisante pour que le polymère organique soit à l'état liquide (généralement entre 125°-300°C, de préférence entre 150°-200°C). Ces compositions se sont toutefois avérées insuffisantes en termes d'ininflammabilité.

*Le document US-A-4 265 963 décrit des compositions ignifugeantes comportant une résine liquide réticulable, un agent réticulant liquide et un agent de gonflement ou expansion à base d'amine.*

*La résine liquide réticulable* est un *copolymère de sucre réducteur présentant des groupements phosphates acides et des groupements phénoliques répétés.*

*L'agent de gonflement peut être la monoéthanolamine, la diéthylamine, et la morpholine, et* *l'agent réticulant est un formaldéhyde, notamment un formaldéhyde uréique.*

Dans la description et revendications, et conformément aux définitions données dans les articles précédents, les termes et expressions indiqués ci-après ont les significations suivantes :
- "un composé acide fort thermodégradable" est un composé qui libère un acide fort, soit seul, soit in situ à partir d'un précurseur, à température élevée, c'est-à-dire entre environ 100°C à environ 250°C ;
- "un composé polyhydrique carboné" est un composé généralement choisi dans les différentes classes de carbohydrates, et qui présente une quantité relativement élevée de carbone et beaucoup de sites hydroxyles ;
- "un agent de gonflement ou expansion" est un agent distinct du composé acide fort et du composé polyhydrique carboné, qui libère des gaz ininflammables, tel que CO2, et NH3, au cours de sa dégradation thermique, et qui participent à l'effet intumescent, en formant une structure expansée carbonée ; ces composés sont généralement des amines et des amides.

Le problème technique que s'est posé la demanderesse est d'obtenir une composition ignifugeante comprenant une fraction liante et un agent intumescent, en gardant ou améliorant les propriétés de l'agent intumescent, sans altérer pour autant les propriétés de base de la fraction liante, par exemple sa thermosoudabilité, et/ou sa résistance à la reprise d'humidité, ce qui permettrait de l'appliquer à des substrats, tels que des fils techniques ou des structures textiles, notamment des tissus techniques, par exemple sous forme de stores, et obtenir une résistance au feu améliorée de ces produits.

La Demanderesse a donc étudié de telles compositions, et a découvert que la solution au problème posé ci-avant réside dans la nécessité de partir d'une fraction liante, ayant elle-même une ininflammabilité minimum, en combinaison avec un certain rapport pondéral entre le composé acide fort thermodégradable et le composé polyhydrique carboné, ce qui permet d'apporter une souplesse quant à la quantité et la composition de l'agent intumescent à utiliser.

Par conséquent, un objet de la présente invention concerne une composition plastique ignifugeante sans halogène, applicable à un substrat, comprenant une fraction liante liant ladite composition, et un agent intumescent constitué par un composé acide fort, thermodégradable, et un composé polyhydrique carboné. La composition est plus particulièrement caractérisée en ce que la fraction liante en tant que telle a un indice limite d'oxygène (ILO) au moins égal à 25 %, et l'agent intumescent est constitué essentiellement par ledit composé acide fort et ledit composé polyhydrique carboné, à l'exclusion d'alkyl-carbonate polyols, l'extrait sec de la composition présentant un rapport pondéral entre ledit composé acide fort et ledit composé polyhydrique carboné compris entre 1,5 et 2, et de préférence de 1,85.

En effet, la demanderesse a découvert que ce rapport en combinaison avec l'indice limite d'oxygène de la fraction liante était important pour assurer l'obtention d'un produit fini, par exemple un fil ignifugé et tissu textile, présentant les caractéristiques nécessaires pour la fabrication de stores par exemple. En particulier, on a découvert que si on descend en-dessous de la valeur de 1,5, les produits ignifugés avec cette composition présentaient une reprise d'humidité trop importante, et étaient difficiles à travailler. Par ailleurs, on a découvert que si le rapport dépasse la valeur de 2, on rencontre des difficultés d'enduction de la composition sur des fils par exemple, et l'intumescence devient très insuffisante.

La présente invention permet aussi de se passer de tout autre agent ignifugeant, notamment toxique, comme la mélamine.

Un autre objet de la présente invention est un fil composite ignifuge, comprenant une âme en matériau sans halogène, et une gaine en matière plastique, la composition de ladite matière plastique étant identique à la composition ignifugeante selon la définition donnée ci-dessus. Ce fil composite ignifuge peut être obtenu de préférence par enduction de l'âme avec une telle composition ignifugeante. L'âme peut être de nature diverse, par exemple un fil en matière minérale ou organique, d'origine naturelle ou synthétique, telle qu'en verre, polyester, polyamide, polypropylène, polyéthylène, et sans halogène ou composé halogéné.

Dans un mode d'exécution préféré de cet objet, le fil ignifuge présente un indice limite d'oxygène mesuré selon la norme NF G 07128 compris entre environ 40% et environ 50%, de préférence égal à 45%, et un taux d'expansion intumescent compris entre environ 30% et environ 60%, de préférence égal à 50%.

Un troisième objet de la présente invention est une structure textile, assemblant ou enchevêtrant des fils ignifuges précédemment définis.

Un quatrième objet de la présente invention est une structure textile composite ignifugée, comprenant un support fibreux sans halogène, et au moins une couche ou film revêtissant le support fibreux, ladite couche ou ledit film étant identique à la composition ignifugeante précédemment définie. Des structures textiles de ce type peuvent être par exemple, des tissus techniques, des structures non-tissées, et des structures tricotées, servant par exemple, à fabriquer des stores, des rideaux et similaires.

La composition ignifugeante selon la présente invention peut se présenter sous toute forme appropriée, que ce soit sous forme de mélange solide, fondu ou liquide. Toutefois, et de manière avantageuse, la composition ignifugeante se présente sous forme d'une dispersion aqueuse.

La fraction liante est, selon un mode d'exécution préféré de l'invention, constituée par un polymère ayant en tant que tel un indice limite d'oxygène (ILO) au moins égal à 25 %.

Selon un autre mode d'exécution préféré de l'invention, la fraction liante comprend un polymère ayant en tant que tel un indice limite d'oxygène (ILO) inférieur à 25 %, et un adjuvant d'ignifugation, par exemple un produit phosphoré anorganique. Un tel composé est disponible dans le commerce, par exemple auprès de la société THOR. Cet adjuvant d'ignifugation peut être aussi un hydroxyde d'alumine, ou un composé organo-phosphoré. Il faut toutefois noter que cet adjuvant est toujours différent et distinct des composants constituant l'agent d'intumescence, et notamment du composé acide fort thermodégradable.

Le polymère de la fraction liante n'est pas limité à un polymère en particulier, pour autant qu'il remplisse la fonction de liant de la composition ignifugeante. Avantageusement, le liant polymère est un polyuréthanne ou un polymère acrylique, auquel cas la fraction liante comporte un adjuvant d'ignifugation.

De préférence, le composé acide fort thermodégradable est choisi dans le groupe consistant en les acides phosphoriques, les acides boriques, ou un sel de ces derniers présentant un cation volatil, et de préférence le polyphosphate d'ammonium. En effet, l'agent source d'acide est choisi pour pouvoir déshydrater de manière efficace l'agent source de carbone, à partir d'une certaine température ou en présence d'une flamme, et pour libérer l'acide en dessous de la température de décomposition de l'agent source de carbone. Les sels à cation volatil de ces acides sont souvent utilisés, car ils permettent de libérer l'acide dans des domaines de température proches de la température d'inflammation du substrat à ignifuger.

Le composé polyhydrique carboné est de préférence un amidon ou alcool polyhydrique, et plus préférentiellement le pentaérythritol. En effet, ces agents contiennent une quantité relativement élevée de carbone et beaucoup de sites hydroxyles, ce qui favorise la formation d'un résidu expansé important.

Selon un mode préféré d'exécution de la présente invention, l'agent intumescent ne comporte pratiquement pas d'agents de gonflement ou expansion, autre que le composé acide fort et/ou le composé polyhydrique carboné. En effet, ceci n'est pas obligatoire pour la formation d'une structure carbonée expansée, car la réaction seule du composé acide fort thermodégradable avec le composé polyhydrique carboné peut libérer suffisamment de gaz pour expanser le résidu de charbon.

De manière préférentielle, l'extrait sec de la composition ignifugeante peut être constitué, en poids :
- de 30% à 50% en polyuréthanne ;
- de 20% à 40% en polyphosphate d'ammonium ;
- de 10% à 30% en pentaérythritol.

Plus préférentiellement, l'extrait sec de la composition précédente est constitué, en poids, de 42,85% en polyuréthanne, de 37,15 % en polyphosphate d'ammonium, et de 20 % en pentaérythritol.

Selon un autre mode d'exécution préféré de l'invention l'extrait sec de la composition ignifugeante peut être constitué, en poids :
- de 35% à 45% en polymère acrylique ;
- de 15% à 35% en polyphosphate d'ammonium ;
- de 10% à 15% en pentaérythritol ;
- de 10% à 30% en adjuvant d'ignifugation.

Dans ce cas, l'extrait sec de la composition est plus particulièrement constitué, en poids à l'état sec :
- de 42,11 % en polymère acrylique ;
- de 25,30 % en polyphosphate d'ammonium ;
- de 13,64 % en pentaérythritol ;
- de 18,95 % en adjuvant d'ignifugation.

Les exemples suivants permettront de mieux comprendre les avantages de la composition ignifugeante selon l'invention, en montrant les valeurs d'ILO mesurées conformément à la norme française NF G 07 128, le taux d'expansion et la reprise à l'humidité que la demanderesse a obtenues pour les formulations revendiquées.

La valeur indice limite d'oxygène (ILO) a été obtenue selon la méthode définie dans la norme NF G 07128, la reprise à l'humidité est celle obtenue sur fil en milieu humide après 4 h à 100 % humidité, et à 20°C, et le taux d'expansion correspond au pourcentage d'expansion obtenu après déclenchement du système intumescent.

Le Tableau 1 suivant donne deux exemples d'une composition ignifugeante selon la présente invention, avec une fraction liante à base d'un mélange de dispersions aqueuses de résines acryliques pures réticulables, vendues sous le nom PLEXTOL^{®} DV440 et PLEXTOL^{®} NV604 par la société ROHM. Les pourcentages de composants donnés sont des pourcentages pondéraux de l'extrait sec.

**TABLEAU 1**

| | **Exemple 1** | **Exemple 2** |
|---|---|---|
| Acryliques (liant) | 40, 15 | 53,1 |
| Additifs | 1,8 | 1,98 |
| Polyphosphate d'ammonium | 24,06 | 16,4 |
| Pentaérythritol | 16,06 | 8,85 |
| Adjuvant d'ignifugation | 17,93 | 19,67 |
| ILO Acryliques | 22,3% | 22,3% |
| ILO Acryliques + Adjuvant d'ignifugation | 26,3 | 26,3 |
| ILO sur films réalisés au laboratoire | 34% | 44,00% |
| Taux d'expansion sur fil enduit | 65,90% | 43,50% |
| Reprise à l'humidité | 1h = 2,76% | 1h = 2,23% |

Lors d'expériences effectuées avec un rapport pondéral entre ledit composé acide fort et ledit composé polyhydrique carboné de 4, il a été découvert que le taux d'expansion était seulement de 10%, ce qui est largement insuffisant pour une fabrication de tissus techniques, tels que des stores.

## Revendications

1. Composition plastique ignifugeante sans halogène, applicable à un substrat, comprenant une fraction liante liant ladite composition, et un agent intumescent constitué au moins par un composé acide fort, thermodégradable, et un composé polyhydrique carboné, **caractérisée en ce que** la fraction liante en tant que telle a un indice limite d'oxygène (ILO) au moins égal à 25 %, et l'agent intumescent est constitué essentiellement par ledit composé acide fort et ledit composé polyhydrique carboné, à l'exclusion d'alkyl carbonate polyols, l'extrait sec de la composition présentant un rapport pondéral entre ledit composé acide fort et ledit composé polyhydrique carboné compris entre 1,5 et 2, et de préférence de 1,85.

2. Composition selon la revendication 1, caractérisée en ce que la fraction liante est constituée par un polymère ayant en tant que tel un indice limite d'oxygéne (ILO) au moins égal à 25 %.

3. Composition selon la revendication 1, caractérisée en ce que la fraction liante comprend un polymère ayant en tant que tel un indice limite d'oxygène (ILO) inférieur à 25 %, et un adjuvant d'ignifugation, différent du composé acide fort, par exemple un composé phosphoré inorganique.

4. Composition ignifugeante selon la revendication 1, caractérisée en ce qu'elle se présente sous forme d'une dispersion aqueuse.

5. Composition selon la revendication 1, caractérisée en ce que le polymère de la fraction liante est un polyuréthanne ou un polymère acrylique, auquel cas la fraction liante comporte un adjuvant d'ignifugation.

6. Composition ignifugeante selon la revendication 1, caractérisée en ce que l'agent intumescent ne comporte pratiquement pas d'agent de gonflement ou expansion, autre que le composé acide fort ou le composé polyhydrique carboné.

7. Composition ignifugeante selon la revendication 1, caractérisée en ce que le composé acide fort thermodégradable est choisi parmi le groupe consistant en les acides phosphoriques, les acides boriques, ou un sel de ces derniers présentant un cation volatil, et de préférence le polyphosphate d'ammonium.

8. Composition ignifugeante selon la revendication 1, caractérisée en ce que le composé polyhydrique carboné est un amidon ou alcool polyhydrique, et plus préférentiellement le pentaérythritol.

9. Composition ignifugeante selon la revendication 1, caractérisée en ce que l'extrait sec est constitué, en poids :
- de 30% à 50% en polyuréthanne ;
- de 20% à 40% en polyphosphate d'ammonium ;
- de 10% à 30% en pentaérythritol.

10. Composition ignifugeante selon la revendication 9, caractérisée en ce que l'extrait sec est constitué, en poids, de 42,85% en polyuréthanne, de 37,15% en polyphosphate d'ammonium, et de 20% en pentaérythritol.

11. Composition ignifugeante selon la revendication 1, caractérisée en ce que l'extrait sec est constitué, en poids :
- de 35% à 45% en polymère acrylique ;
- de 15% à 35% en polyphosphate d'ammonium ;
- de 10% à 15% en pentaérythritol ;
- de 10% à 30% en adjuvant d'ignifugation.

12. Composition ignifugeante selon la revendication 11, caractérisée en ce l'extrait sec est constitué, en poids :
- de 42,11% en polymère acrylique ;
- de 25,30% en polyphosphate d'ammonium ;
- de 13,64% en pentaérythritol ;
- de 18,95% en adjuvant d'ignifugation.

13. Fil composite ignifuge, comprenant une âme en matériau sans halogène, et une gaine en matière plastique, caractérisé en ce que ladite matière plastique est identique à la composition ignifugeante selon l'une quelconque des revendications 1 à 12.

14. Fil composite ignifuge selon la revendication 13, caractérisé en ce qu'il est susceptible d'être obtenu par enduction avec une composition ignifugeante selon l'une quelconque des revendications 1 à 12.

15. Fil ignifuge selon l'une quelconque des revendications 13 et 14, caractérisé en ce qu'il présente un indice limite d'oxygène mesuré selon la norme NF G 07128 compris entre environ 40% et environ 50%, de préférence égal à 45%, et un taux d'expansion intumescent compris entre environ 30% et environ 60%, de préférence égal à 50%.

16. Structure textile, assemblant ou enchevêtrant des fils selon l'une quelconque des revendications 13, 14 et 15.

17. Structure textile composite ignifugée, comprenant un support fibreux sans halogène, et au moins une couche ou film revêtissant le support fibreux, caractérisée en ce que ladite couche ou le dit film est identique à la composition ignifugeante selon l'une quelconque des revendications 1 à 12.

## Patentansprüche

1. Feuerfeste halogenfreie Kunststoffzusammensetzung, die auf einem Substrat anwendbar ist, mit einem Bindemittelanteil zum Binden der Zusammensetzung, mit einem aufschäumenden Agens, das durch zumindest eine thermodegradierbare, stark saure Verbindung gebildet wird, und mit einer Polyhydroxykohlenstoffverbindung, **dadurch gekennzeichnet, daß** der Bindemittelanteil selbst einen Sauerstoffgrenzwertindex (ILO) von mindestens 25 % hat, und daß das aufschäumende Agens im wesentlichen durch die stark saure Verbindung und die Polyhydroxykohlenstoffverbindung gebildet wird, mit Ausnahme von Alkylcarbonatpolyolen, wobei der Trockenextrakt der Zusammensetzung ein Gewichtsverhältnis der stark sauren Verbindung zu der Polyhydroxykohlenstoffverbindung von 1,5 bis 2, und vorzugsweise von 1,85 aufweist.

2. Zusammensetzung nach Anspruch 1, dadurch gekennzeichnet, daß der Bindemittelanteil durch ein Polymer gebildet wird, das selbst einen Sauerstoffgrenzwertindex (ILO) von mindestens 25 % hat.

3. Zusammensetzung nach Anspruch 1, dadurch gekennzeichnet, daß der Bindemittelanteil ein Polymer aufweist, das selbst einen Sauerstoffgrenzwertindex (ILO) unter 25 % hat, und einen Feuerschutzzusatz aufweist, der sich von der stark sauren Verbindung unterscheidet, z.B. eine anorganische phosphorhaltige Verbindung.

4. Feuerfeste Zusammensetzung nach Anspruch 1, dadurch gekennzeichnet, daß sie in Form einer wäßrigen Dispersion vorliegt.

5. Zusammensetzung nach Anspruch 1, dadurch gekennzeichnet, daß das Polymer des Bindemittelanteils ein Polyurethan oder ein Acrylpolymer ist, wobei in diesem Fall der Bindemittelanteil einen Feuerschutzzusatz enthält.

6. Feuerfeste Zusammensetzung nach Anspruch 1, dadurch gekennzeichnet, daß das aufschäumende Agens außer der stark sauren Verbindung oder Polyhydroxykohlenstoffverbindung praktisch kein Quell- oder Schäumagens enthält.

7. Feuerfeste Zusammensetzung nach Anspruch 1, dadurch gekennzeichnet, daß die thermodegradierbare stark saure Verbindung aus der Gruppe ausgewählt ist, bestehend aus Phosphorsäuren, Borsäuren oder einem Salz der letzteren, das ein verflüchtigbares Kation aufweist, vorzugsweise Ammoniumpolyphosphat.

8. Feuerfeste Zusammensetzung nach Anspruch 1, dadurch gekennzeichnet, daß die Polyhydroxykohlenstoffverbindung eine Stärke oder ein Polyhydroxyalkohol, und höchst bevorzugt Pentaervthrit, ist.

9. Feuerfeste Zusammensetzung nach Anspruch 1, dadurch gekennzeichnet, daß der Trockenextrakt gewichtsanteilig gebildet wird aus
- 30 % bis 50 % Polyurethan;
- 20 % bis 40 % Ammoniumpolyphosphat;
- 10 % bis 30 % Pentaerythrit.

10. Feuerfeste Zusammensetzung nach Anspruch 9, dadurch gekennzeichnet, daß der Trockenextrakt gewichtsanteilig aus 42,85 % Polyurethan, 37,15 % Ammoniumpolyphosphat und 20 % Pentaerythrit gebildet wird.

11. Feuerfeste Zusammensetzung nach Anspruch 1, dadurch gekennzeichnet, daß die Trockensubstanz gewichtsanteilig gebildet wird aus
- 35 % bis 45 % Acrylpolymer;
- 15 % bis 35 % Ammoniumpolyphosphat;
- 10 % bis 15 % Pentaerythrit;
- 10 % bis 30 % Feuerschutzzusatz.

12. Feuerfeste Zusammensetzung nach Anspruch 11, dadurch gekennzeichnet, daß die Trockensubstanz gewichtsanteilig gebildet wird aus
- 42,11 % Acrylpolymer;
- 25,30 % Ammoniumpolyphosphat;
- 13,64 % Pentareythrit;
- 18,95 % Feuerschutzzusatz.

13. Feuerfeste Verbundfaser, die einen Kern aus einem halogenfreien Material und einen Mantel aus Kunststoffmaterial aufweist, dadurch gekennzeichnet, daß das Kunststoffmaterial mit der feuerfesten Zusammensetzung nach einem der Ansprüche 1 bis 12 identisch ist.

14. Feuerfeste Verbundfaser nach Anspruch 13, dadurch gekennzeichnet, daß diese durch Überziehen mit einer feuerfesten Zusammensetzung nach einem der Ansprüche 1 bis 12 erhalten wird.

15. Feuerfeste Faser nach Anspruch 13 oder 14, dadurch gekennzeichnet, daß diese einen nach der Norm NF G 07128 gemessenen Sauerstoffgrenzwertindex von etwa 40 % bis etwa 50 %, vorzugsweise 45 %, und einen Aufschäumgrad von etwa 30 % bis etwa 60 %, vorzugsweise 50 %, aufweist.

16. Textilstruktur, die aus Fäden nach einem der Ansprüche 13, 14 oder 15 zusammengesetzt oder von diesen durchzogen ist.

17. Feuerfeste zusammengesetzte Textilstruktur, die ein halogenfreies faseriges Trägermaterial und zumindest eine Schicht oder einen Film aufweist, der bzw. die das faserige Trägermaterial bedeckt, dadurch gekennzeichnet, daß die Schicht oder der Film mit der feuerfesten Zusammensetzung nach einem der Ansprüche 1 bis 12 identisch ist.

## Claims

1. Halogen-free fire-retarding plastic composition, which can be applied to a substrate, comprising a binding fraction, which binds the said composition, and an intumescent agent consisting at least of a thermodegradable strong-acid compound and a polyhydric carbon compound, **characterized in that** the binding fraction as such has a limited oxygen index (LOI) of at least 25% and the intumescent agent essentially consists of the said strong-acid compound and the said polyhydric carbon compound, with the exclusion of alkyl carbonate polyols, the solids content of the composition having a weight ratio of the said strong-acid compound to the said polyhydric carbon compound of between 1.5 and 2, and preferably 1.85.

2. Composition according to Claim 1, characterized in that the binding fraction consists of a polymer having, as such, a limited oxygen index (LOI) of at least 25%.

3. Composition according to Claim 1, characterized in that the binding fraction comprises a polymer having, as such, a limited oxygen index (LOI) of less than 25% and a fire retardant, different from the strong-acid compound, for example an inorganic phosphorous compound.

4. Fire-retarding composition according to Claim 1, characterized in that it is in the form of an aqueous dispersion.

5. Composition according to Claim 1, characterized in that the polymer of the binding fraction is a polyurethane or an acrylic polymer, in which case the binding fraction contains a fire retardant.

6. Fire-retarding composition according to Claim 1, characterized in that the intumescent agent contains virtually no blowing or expansion agent other than the strong-acid compound or the polyhydric carbon compound.

7. Fire-retarding composition according to Claim 1, characterized in that the thermodegradable strong-acid compound is chosen from the group consisting of phosphoric acids and boric acids, or a salt of the latter having a volatile cation, and preferably ammonium polyphosphate.

8. Fire-retarding composition according to Claim 1, characterized in that the polyhydric carbon compound is a starch or a polyhydric alcohol, and more preferably pentaerythritol.

9. Fire-retarding composition according to Claim 1, characterized in that the solids content consists, by weight:
- of 30% to 50% of polyurethane;
- of 20% to 40% of ammonium polyphosphate;
- of 10% to 30% of pentaerythritol.

10. Fire-retarding composition according to Claim 9, characterized in that the solids content consists, by weight, of 42.85% of polyurethane, of 37.15% of ammonium polyphosphate and of 20% of pentaerythritol.

11. Fire-retarding composition according to Claim 1, characterized in that the solids content consists, by weight:
- of 35% to 45% of acrylic polymer;
- of 15% to 35% of ammonium polyphosphate;
- of 10% to 15% of pentaerythritol;
- of 10% to 30% of fire retardant.

12. Fire-retarding composition according to Claim 11, characterized in that the solids content consists, by weight:
- of 42.11% of acrylic polymer;
- of 25.30% of ammonium polyphosphate;
- of 13.64% of pentaerythritol;
- of 18.95% of fire retardant.

13. Fire-resistant composite yarn comprising a core made of a halogen-free material and a sheath made of a plastic, characterized in that the said plastic is identical to the fire-retarding composition according to any one of Claims 1 to 12.

14. Fire-resistant composite yarn according to Claim 13, characterized in that it can be obtained by coating with a fire-retarding composition according to any one of Claims 1 to 12.

15. Fire-resistant yarn according to either of Claims 13 and 14, characterized in that it has a limited oxygen index, measured according to the NF G 07128 standard, of between approximately 40% and approximately 50%, preferably of 45%, and an intumescent expansion factor of between approximately 30% and approximately 60%, preferably of 50%.

16. Textile structure, consisting of an assembly or entanglement of yarns according to any one of Claims 13, 14 and 15.

17. Fire-retarded composite textile structure, comprising a halogen-free fibrous support and at least one layer or film coating the fibrous support, characterized in that the said layer or the said film is identical to the fire-retarding composition according to any one of Claims 1 to 12.
